# EUROPEAN PATENT SPECIFICATION

(11) **EP 2 079 862 B1**
(45) Date of publication and mention of the grant of the patent: **14.08.2013**
(21) Application number: 07819465.1
(22) Date of filing: 30.10.2007
(51) Int. Cl.: D01D 5/06, D01F 11/02, D01D 5/04, D01F 4/00, D01F 4/02

(54) **METHOD AND APPARATUS FOR THE MANUFACTURE OF A FIBRE**
VERFAHREN UND VORRICHTUNG ZUR FASERHERSTELLUNG
PROCÉDÉ ET APPAREIL POUR LA FABRICATION D'UNE FIBRE

(30) Priority: 30.10.2006 GB 0621496; 30.10.2006 US 863573 P
(43) Date of publication of application: 22.07.2009
(73) Proprietor: Spin'tec Engineering GmbH, 52068 Aachen (DE)
(72) Inventor: RHEINNECKER, Michael, 52066 Aachen (DE); KOHLHAAS, Stefan, 46562 Voerde (Niederrhein) (DE); ZIMMAT, Rolf, 40589 Düsseldorf (DE)
(74) Representative: Harrison, Robert John
(86) International application number: PCT/EP2007/009430
(87) International publication number: WO 2008/052755

(56) References cited:
- WO-A1-03/060207
- WO-A2-03/060099
- GB-A- 1 107 066
- US-A- 5 252 277
- US-A1- 2005 110 186
- US-A1- 2005 110 186
- MATTHEWS J A ET AL: "Electrospinning of Collagen Nanofibers" BIOMACROMOLECULES, ACS, WASHINGTON, DC, US, vol. 3, no. 2, 1 January 2002 (2002-01-01), pages 232-238, XP003005525 ISSN: 1525-7797
- SUNDARAY B ET AL: "ELECTROSPINNING OF CONTINUOUS ALIGNED POLYMER FIBERS" APPLIED PHYSICS LETTERS, AIP, AMERICAN INSTITUTE OF PHYSICS, MELVILLE, NY, vol. 84, no. 7, 16 February 2004 (2004-02-16), pages 1222-1224, XP001197551 ISSN: 0003-6951
- Sung-Won Ha ET AL: "Dissolution of Bombyx m ori Silk Fibroin in the Calcium Nitrate Tetrahydrate-Methanol System and Aspects of Wet Spinning of Fibroin Solution", Biomacromolecules, vol. 4, no. 3, 1 May 2003 (2003-05-01), pages 488-496, XP055045669, ISSN: 1525-7797, DOI: 10.1021/bm0255948
- LAZARIS A ET AL: "Spider silk fibers spun from soluble recombinant silk produced in mammalian cells", SCIENCE, AMERICAN ASSOCIATION FOR THE ADVANCEMENT OF SCIENCE, WASHINGTON, DC; US, vol. 295, no. 5554, 18 January 2002 (2002-01-18), pages 472-476, XP002243786, ISSN: 0036-8075, DOI: 10.1126/SCIENCE.1065780
- SCHEIBEL ET AL: "Protein fibers as performance proteins: new technologies and applications", CURRENT OPINION IN BIOTECHNOLOGY, LONDON, GB, vol. 16, no. 4, 1 August 2005 (2005-08-01) , pages 427-433, XP005006168, ISSN: 0958-1669
- PARK W H ET AL: "Effect of chitosan on morphology and conformation of electrospun silk fibroin nanofibers", POLYMER, ELSEVIER SCIENCE PUBLISHERS B.V, GB, vol. 45, no. 21, 29 September 2004 (2004-09-29), pages 7151-7157, XP004571854, ISSN: 0032-3861, DOI: 10.1016/J.POLYMER.2004.08.045

## Description

### Field of the Invention

The application relates to an apparatus and method for the extrusion of silk fibres.

### Prior Art

Industrial production of man-made fibres, described for example in the *Complete Textile Glossary* of Hoechst Celanese (Customer Information 2001, Celanese Acetate LLC), uses spinning techniques by which polymer solutions or melts are extruded with high pressure through spinnerets as extruded material (also called an extrudate) to form fibres at a nozzle exit (fibre formation point) which are collected by take-up wheels at some distance from the nozzle exit.

Fibre formation occurs between the nozzle exit and the take-up wheel through polymer crystallization or solvent precipitation which can be induced and controlled by cooling, solvent evaporation or chemical treatment. Given those well established chemical and physical treatment steps, any additional mechanical support of the extrudate after exiting from the spinning nozzle for the purpose of controlling the fibre crystallisation process is not a preferred solution for industrial spinning processes.

Two types of spinning are generally known in the art (see Fundamentals of Fibre Formation, Andrzej Ziabicki, John Wiley & Sons). Melt-spinning is carried out using molten polymers und dry spinning or wet spinning is carried out from solution. A typical fibre spinning process is disclosed in European Patent EP 593967 and in the International Patent Application No WO 03/060207 (in the latter application a so-called dry-jet-wet spinning process is disclosed). In the two cited patent documents a spin solution based on a polypeptide is disclosed. Similar methods have been known for some time in connection with the spinning of cellulose fibres, as is described in US patent No. US 4246221.

The aforementioned conventional spin solutions can be extruded through a spinneret at a relatively high speed because of their rheological properties. The solution emerges from the spinneret as a liquid jet with a large amount of kinetic energy and enters a coagulation bath. The fibre is formed in an air gap or a non-precipitation medium between the spinneret and the coagulation bath and a pre-orientation of the polymers is carried out. Finally the fibres are precipitated in the coagulation bath (see US Patent No US 446221).

A similar method is further described in US Patent No 4,344,908. The US '908 patent discloses a spinning solution which is extruded through an air gap or non-precipitation medium into a cooler device in order to create a precursor filament from a polymer gel. The precursor filament is then warmed in a classical dry spinning method and subsequently expanded.

In contrast to those established processes for man-made fibre production, according to a recent review by Scheibel in Current Opinion in Biotechnology 2005, 16, 427-433, all efforts have failed to apply conventional spinning techniques to spin feedstocks such as biological materials like spidroin proteins. Hence, despite the high level of technical development of established spinning techniques, it has thus far been impossible according to the Scheibel review paper to apply economically attractive and technically robust industrial spinning processes to certain feedstocks. Similarly it has thus far not been possible to use the benign process parameters used by nature (aqueous buffers, room temperature and normal pressure) to manufacture materials such as fibres, films or coatings on an industrial scale.

European Patent No EP 1 244 828 teaches an apparatus and method for the manufacture of fibres from protein feedstocks using a spinneret and a take-up drum. However, the take-up drum of this application is a passive item of the apparatus, situated at a substantial distance from the spigot or exit of the spinneret. The formation of the fibres in the '828 Patent Application takes place within the body of the spinneret and not on the take-up drum of this application. However, the fibre formation inside the spinneret may not be ideal for those natural feedstocks which exhibit large variations in feedstock parameters, such as homogeneity and concentration. Those variations in feedstock parameters may result in fluctuations of the fibre formation point during the spinning process and may increase the effort required for monitoring spinning of protein feedstocks using the method of the disclosure of EP 1 244 828.

UK Patent No. GB 385160 teaches an apparatus in which freshly spun artificial silk fibres are washed, desulphurised, bleached, oiled or dried. This patent teaches a post processing of fibres which have already been spun. This patent does not teach the spinning of the artificial silk fibres.

US Patent No 5,252,277 is titled "Process for spinning polypeptide fibres from solutions of lithium thiocyanate band liquefied phenol" and is owned by E I Du Pont de Nemours and Company. The Du Pont patent discloses a process for manufacturing polypeptide solutions and spinning them into fibres. The process involves dissolving a polypeptide in a solvent system that comprises lithium thiocyanate (LiSCN) and a liquefied phenol. The process describes a wet spinning process whereby the spinning solution is extruded directly into a coagulating bath. The coagulating bath comprises the lithium thiocyanate and liquefied phenol. The process described by Du Pont Patent uses harsh chemicals to extrude the polypeptide fibres. The harsh chemicals used in the process described by the Du Patent are polypeptide denaturing chemicals.

An article in Biomacromolecules 2002, 3, 232-238 by Matthews et al. is titled "Electrospinning of collagen nanofibres". Matthews et al discloses fabrication process that uses an electric field to control the deposition of polymer fibres onto a target substrate. The biomacromolecules article discloses an electrospinning system comprising a grounded target, a high voltage source, a collagen reservoir and a nozzle. The fibre deposition can be regulated by controlling the motion of the grounded target and a source solution of collagen with respect to one and other. The method disclosed in the biomacromolecules document discloses the dissolution of collagen into a solvent of 1,1,1,3,3,3 hexafluoro-2-propoanol (HFP). Matthews et al does not disclose the use of water soluble material.

US Patent Publication No. 2005/0110186 is titled "Solvent casting process, polarizing plate protective film, optically functional film and polarizing plate" and is owned by The Fuji Photo Film company. The Fuji patent discloses a process for solvent casting including casting a dope from a casting die onto a casting support. The Fuji photo film company document discloses the casting of cellulose acetate films by a solvent casting method and apparatus. The Fuji patent application does not disclose an apparatus or method for the manufacture of a silk fibre from a water soluble material.

UK Patent Application No. 1,107,066 is titled "Improved process and apparatus for production of membranes" and is owned by General Dynamics Corporation. The General Dynamics patent application discloses the preparation of a casting solution by dissolving a film forming cellulosic ester, such as cellulose acetate, plus an aqueous solution of a pore-producing salt in an organic solvent. The General Dynamics document does not disclose a method or an apparatus that uses a water soluble material to manufacture of a silk fibre.

An article in Applied Physics Letters Volume 84, No 7, pages 1222-1224 by Sundaray et al. is titled "Electrospinning of continuous aligned polymer fibres". Sundaray et al. discloses electrospinning for preparing polymer fibres using a voltage of 4500V and a separation distance of about 1 to 3 cm between electrodes to manufacture fibres with a separation between the fibres in the range of 5 to 100 µm. Sundaray et al. paper discloses that a smaller distance between the electrodes provides a better control on the formation of the polymer fibres. The fibres are manufactured from polystyrene and polymethylmethacrylate. Sundaray et al. does not disclose the manufacture of silk fibres from a water soluble material.

In the case of a spin solution which is sensitive to shear stresses, such as a protein solution, it is not possible to use the spin solution as the feedstock in a conventional spinning method as discussed above. The spin solution cannot be converted into the liquid jet as the solution would solidify due to the stress placed on the proteins in the spin solution and the rheological properties of the spin solution. Such spin solutions must be extruded extremely slowly and with great care. One known issue with such slow extrusion is the risk of formation of drops of the extruded material at the nozzle exit due to the surface energy of the material. As a result there is a need to first produce a precursor material with a particular shape and then, if necessary, chemically or physically treat the precursor material in a treatment zone. Finally, the fibre is pulled in order to allow self-assembly of the molecules within the fibre. The prior art discloses no method of producing such fibres.

### Summary of the invention

The invention comprises an apparatus for the continuous extrusion of a silk fibre from a water-soluble silk protein. The aaparatus comprises a material supplier which supplies the water-soluble silk protein and has at least one opening though which the water-soluble silk protein is extruded to form an extruded material. A moving surface is positioned adjacent and located between 0.1 mm and 50 mm to the at least one opening and receives the extruded material from the at least one opening. The apparatus further includes a treatment zone for treating the extruded materal. In this invention, the extruded material does not pass through a large air gap but is extruded substantially directly onto the surface of the moving surface. The moving surface allows the extruded material to be transported onto the treatment zone in which the chemical properties and physical properties of the extruded material are changed. The direct physical contact between the surface of the moving surface and the extruded material enables change of chemical and physical properties of the extruded material, thereby allowing precise control of conversion processes of the extruded material to form a silk fibre.

The invention also comprises a method for the extrusion of materials which are mechanically strong and are made out of natural or man-made silk feedstocks.

The method and apparatus can also comprise a wet-spinning step. This can be done, for example, by using a solvent bath and passing the fibre through the solvent bath after the fibre has left the moving surface. Alternatively, the extruded material on the moving surface can be passed through the solvent bath before formation of the finished product.

The material can be treated in the material supplier prior to the exit of the extruded material from the opening and physical contact with the moving surface. A spinneret to allow the treatment of the material in the material supplier is described in US Patent 6,858,168 B1, owned by the applicant, and can be used to enable this treatment of the material within the spinneret.

The method and apparatus of the present invention allow the production of the finished products as a continuous process.

The apparatus and method of the present invention enable the use of water-soluble silk proteins or derivatives thereof. The silk proteins include but are not limited to the silk protein family of spidroins and fibroins.

The properties of the silk proteins can be changed during formation of the silk fibre on the moving surface by transferring additives to the extruded material. The transfer of the additives can be either made through the moving surface or from the outside of the moving surface. The selection of the additives is extensive and only limited by the intended use of an end product from which the material is made. Examples of those additives include but are not limited to organic or inorganic chemicals changing the tensile strength or chemical properties of the finished product or conferring industrially useful properties to the finished products, such e.g. electrostatic, electric charge carrier or magnetic properties. Other additives may include therapeutically active substances, such as small molecular drug entities or proteins or metals such as silver.

The finished products of the invention can be used for a number of purposes including, but not limited to, the manufacture of silk fibre based objects of any shape and dimension required by the intended use of the end products.

### Description of the Drawings

Figure 1 shows a first aspect of the extrusion apparatus
Figure 2 shows stress strain curves of fibres produced using the extrusion apparatus

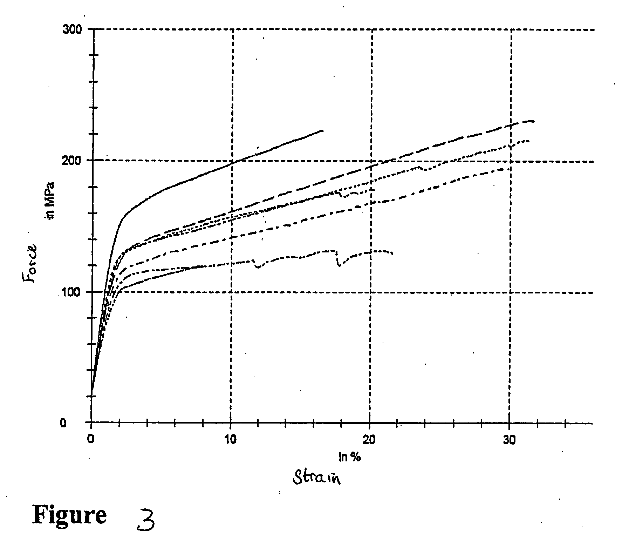

Figure 3 shows stress strain curves of fibres produced using the extrusion apparatus in wet mode.
Figure 4 shows another aspect of the extrusion apparatus

### Detailed description of the invention

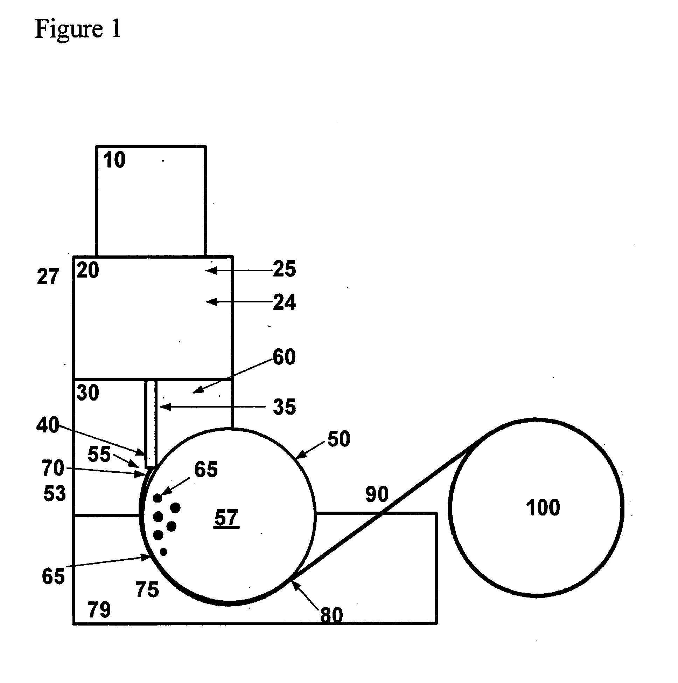

Figure 1 shows an extrusion apparatus in accordance with one aspect of the invention. The extrusion apparatus comprises a feedstock pump 10, a feedstock reservoir 20 for storing material 25 to be extruded (called "feedstock"), a feedstock loading device 30 with a channel 35 and an opening 40 through which the feedstock 25 is passed and a moving surface 50. Optionally, the reservoir 20 may have permeable or semi-permeable walls. The feedstock 25 stored in the feedstock reservoir 20 includes but is not limited to silk proteins,or any combination or derivative thereof. The silk proteins may include members of the spidroin and fibroin protein family,.

The silk proteins used in the feedstock 25 are soluble in water,.

Optionally, the feedstock loading device 30 is filled with a reactive medium 60 which surrounds the channel 35. The channel 35 may have porous walls to allow at least some components from the reactive medium 60 to pass through the porous walls of the channel 35 and chemically or physically react with the feedstock 25. The components in the reactive medium 60 passing through the porous walls may be used at any stage of the process to support formation and crystallization of materials such as fibres as is explained in detail in US Patent 6,858,168, the disclosure of which is incorporated by reference.

The moving surface 50 comprises a take-up point 70, a treatment zone 75 and a material formation point 80. The feedstock 25 emerges from the opening 40 of the channel 35 in the feedstock loading device 30 and is accepted by a surface of the treatment device 50. The distance 55 between the opening 40 and the moving surface 50 is short. The distance 55 chosen is such that the feedstock 25 does not substantially solidify during the period of its exit from the opening 40 to the take up by the surface 50. In other words, the extruded material on the moving surface 50 is substantially fluid when the extruded material arrives on the surface of the moving surface 50. The distance (55) is between 0.1 mm and 50 mm.

The moving surface 50 is rotating and accepts the feedstock 25 at the take-up point 70. The moving surface 50 rotates the feedstock 25 as an extrudate into and through the treatment-zone 75 to the material formation point 80 at which point the extrudate - now converted into a fibre forming material - leaves the moving surface 50. Optionally, the treatment zone 75 may be realised as a treatment bath 79. The feedstock 25 changes its physical form on the moving surface 50 and in the treatment zone 75 from a substantially fluid form at the take-up point 70 on exit from the opening 40 of the feedstock loading device 30 to a substantially solid or gel form at the material formation point 80. The moving surface 50 is made, for example, from acryl, aluminium, steel or PTFE.

The properties of the fibre forming material forming on the moving surface 50 can be further changed in the treatment zone 75 by conferring additives or functional elements 65 either through or from the outside of the moving surface 50 into the extrudate. For example, the moving surface 50 might have porous walls and may be filled with or consists of a chamber 57 that is filled with a medium containing the additives or functional elements. Alternatively the additives or functional elements 65 could be "sprayed" or otherwise added from the outside onto the extrudate.

Particularly suitable additives will be those organic or inorganic substances able to facilitate the conversion of the feedstock 25 in its substantially initial fluid form to a substantially solid form for forming the fibre forming material. This may specifically involve also the addition of other natural or recombinant protein-based or peptide-based or non-biological liquid crystalline materials as additives.

For practicing the invention with, for example, silk protein feedstocks, the additives may include copper, known to enhance the formation of ß-sheets (see, for example, Zhou et al "Effect of metallic ions on silk formation in the Mulberry silkworm, Bombyx mori, J.Phys.Come B Condens Matter Surf Interfaces Biophys, 8 Spe 2005; 109 (35) pp 16937-45, and Zhou et al "Copper in the silk formation process of Bombyx mori silkworm", FEBS Lett., 20 Nov 2003, 554(3), pp 337-41).

The selection of additives that can be added is extensive and only limited by the intended use of the product. As examples, the following additives can be envisaged:
- Inorganic or organic liquid crystals
- Agents facilitating the conversion from liquid to solid crystal phase
- Organic additives:
   ○ Small molecular entities
   ○ Peptides
   ○ Proteins
   ○ Carbohydrates
   ○ Lipids
   ○ Nucleic acids such as DNA, RNA, PNAs and other nucleic acid analogues with more than 100 bases length as well as fragments thereof with less than 100 bases length such as for example siRNAs
- Inorganic additives:
   ○ Additives or precursors that improve or render mechanical, optical, electrical or catalytic properties
   ○ Minerals such as phosphates, carbonates, sulphates, fluorides, silicates etc. and mineraloids such as clays, talc, and silicas,
   ○ Salts of alkali and alkaline earth metals, transition metals, post transition metals and alloys thereof,
   ○ Metal complexes such as metal ions coordinated with EDTA or other chelating agents,
   ○ Insulators such as metal oxides like Fe₂O₃, Al₂O₃, TiO₂,
   ○ Any III-V or II-VI semiconductor and conductors, such as metals and alloys thereof,
   ○ Carbon-based additives, such as fullerenes, carbon nanotubes, fibres or rods, graphite
- Hydrophobic, hydrophilic or amphiphilic additives to adjust the physical properties of precursor biomaterials during the wetting, stretching and drying process
- Nanoparticles
- Physiologically active compounds such as
   ○ Antibodies and their analogous
   o Antiseptics, antiviral agents and antibiotics
   ○ Anti-coagulants and anti-thrombotics
   ○ Vasodilatory agents
   ○ Chemotherapeutic agents
   ○ Anti-proliferative agents
   ○ Anti-rejection or immunosuppressive agents
   ○ Agents acting on the central and peripheral nervous system
   ○ Analgesics
   ○ Anti-inflammatory agents
   ○ Hormones such as steroids
   ○ Mineralisation agents for tooth regeneration such as fluorapatite for tooth regeneration
   ○ Mineralisation agents for bone regeneration such as hydroxylapatite, tricalcium phosphate, marine animal derived particles such as corals and chitosans and the like
   ○ Growth factors such as
      - bone morphogenic proteins BMPs
      - bone morphogenic-like proteins GFDs
      - epidermal growth factors EGFs
      - fibroblast growth factors FGFs
      - transforming growth factors TGFs
      - vascular endothelial growth factors VEGFs
      - insulin-like growth factors IGFs
      - nerve repair and regeneration factors NGFs
      - platelet-derived growth factors PDGFs
   ○ Proteins functioning as cell or protein binding agents such as collagen IV, polylysine, fibronectin, cadherins, ICAM, V-CAM, N-CAM, selectins, neurofascin, oxonin, neuroglinin, fascilin
   ○ Cell-binding motives such as for example the RGD or RADAR recognition sites for cell adhesion molecules
   ○ Wound healing agents
   ○ Agents for preventing scar-formation such as for example Cordaneurin or BMP-1
   ○ Other naturally derived or genetically engineered therapeutically active proteins, polysaccharides, glycoproteins or lipoproteins
   ○ Therapeutically active cells such as for example stem cells or autologous cells derived from a site of the patient
- Agents for detecting changes of pH such as neutral red
- Agents promoting ß-sheet formation of precursor biomaterials
- Agents such as biodegradable polymers which degrade at controllable rates thereby enabling controlled biodegradability
- Agents such as protease inhibitors which inhibit protease activity for example in the site of implantation in the patient thereby enabling controlled biodegradability
- Aprotic solvents improving hydrogen bond formation in peptides and proteins such as ether, ester, acidanhydride, ketones (e.g. acetone), tertiary amines, dimethylformamide, pyridine, furane, thiophen, trichlorethane, chloroform and other halogenated hydrocarbons, dimethylsulphoxide, dimethylsulphate, dimethylcarbonate, imsol, anisol, nitromethane.
- Agents enhancing release of physiologically active compounds
- Naturally derived or chemically synthesised dyes
- Naturally derived or genetically engineered colouring agents such as green fluorescent protein
- Naturally derived or genetically engineered structural load bearing proteins such as actin, silk, collagen, fibronectin and analogous or derivates thereof
- Organic and inorganic electrically conducting and semi-conducting materials
- Polyelectrolytes with bound positive or negative charges
- Ionic liquids
- Materials conferring transient or permanent magnetism
- Water soluble polymers such as polylactic acid or polycaprolactone
- Glass fibres

It should be understood that the list of additives is not intended to be limiting of the invention but is exemplary of the additives that can be added to the feedstock and precursor biomaterial.

Finally, the finished product 90 is taken-up by a material storage device 100 which is rotating.

The following shows an overview of the method of the invention.

### Step 150

- Pumping feedstock with pump 10 at velocity V1 from reservoir 20 through opening 40 onto a moving surface 50 at take-up point 70.
- Optionally, moving surface 50 may be rotated with velocity V2. As a further option, feedstock transfer device 30 may be filled with reactive medium 60.

### Step 200

- Translocation of the extrudate on the moving surface 50 through treatment zone 75 by rotation of the treatment drum.
- Change of material properties of the extrudate in the treatment zone 75 on the moving surface 50 through physical or chemical means.
- Optionally, translocation of the extrudate may take place through rotation of the moving surface 50 with circumferential velocity V2. As a further option, additives or functional elements 65 may be added to the extrudate in the treatment zone 75 either through or from the outside of moving surface 50.

### Step 300

- Pulling of material away from the moving surface 50 with velocity V3 at the material formation point 80 resulting in material 90 having no physical contact with moving surface 50.
- Optionally, wind-up of material 90 on a rotating material storage device 100.

In a first step 150, the feedstock 25 is pumped from the feedstock reservoir 20 through the channel 35 to the opening 40 onto the moving surface 50 at the take-up point 70. The moving surface 50 is rotating and imparts to the extrudate at the take-up point 70 a velocity V2 which may be similar or different to the velocity V1 of the feedstock 25 exiting the opening 40. Should the velocities V1 and V2 be different, the resulting speed differential will cause a physical shearing of the extruded material after exiting the opening 40.

In the next step 200, the treatment zone 75, which begins at the take-up point 70 and ends at the material formation point 80, is used to change the physical and chemical properties of the extrudate and thereby enabling control of the formation of the material 90 and the crystallization process taking place on the moving surface 50. The control of the properties of the finished product 90 on the moving surface 50 may include sensing and/or actively changing physical and/or chemical parameters of the extrudate. Non-limiting examples include changing the magnetism, electrical conductivity, temperature, pH, ion or solvent concentration of the extrudate and thereby influencing the crystallization of the extrudate and material manufacturing process in a controlled fashion. The movement of the extruded material through the treatment zone 75 may take place by rotation of the treatment device 50.

The treatment zone 75 may also be used to change properties of the extrudate by transferring additives or functional elements 65 either through or from the outside of the moving surface 50 into the extrudate.

In the final step 300, at the material formation point 80, the extruded material 90 (which is a fibre forming material) is pulled away with a velocity V3 from the moving surface 50 such that the extruded material 90 no longer has any physical contact with the surface of the moving surface 50. The velocity V3 may be similar or substantially different to the velocity V2. Should the velocities V2 and V3 be different, the resulting speed differential will cause a physical shearing of the extruded material 90 at the material formation point 80. Optionally, the extruded material 90 may be wound up on the material storage device 100.

Subsequent to the leaving of the extruded material 90 from the moving surface 50, the extruded material 90 can be treated in, for example, a treatment bath as is known in the prior art. An example of a treatment bath is shown in US Patent 4,344,908.

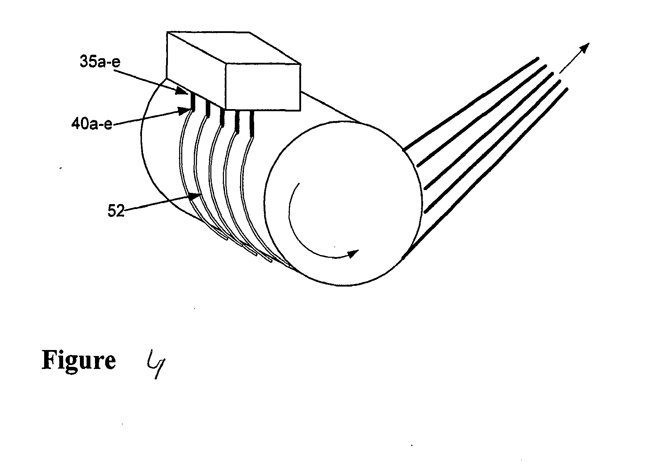

Figure 4 shows an extrusion apparatus according to another aspect of the invention. Figure 4 shows the moving surface 50 on which five tracks 52 of the extruded material are aligned in a parallel fashion. The extrusion apparatus has five channels 35a-e each of which has an opening 40a-e through which the feedstock 25 is passed onto the moving surface 50.

The invention will now be illustrated with reference to several examples. However, it will be appreciated that the invention is not limited to these examples.

### Example 1:

The extrusion process of the invention was started by pumping an aqueous feedstock comprising a fibroin solution of about 20 % wt/v fibroin concentration with a velocity V1 of about 0.3 mm/s through a channel with inner diameter of 0,7 mm onto a drum which rotates with a circumferential velocity V2 of about 1.5 mm/s and has a diameter of about 50 mm. The distance between the opening of the channel and the surface of the drum in this instance is less than 1 mm. The drum forms the moving surface.

The aqueous feedstock was prepared according the method described in UK Patent Application No. 0604089.3 "Method and Apparatus for Extraction of Arthropod Gland" filed by the Applicants, the disclosure of which is incorporated herein by reference. The drum was heated to a temperature of between 40 and 50°C thereby enabling control of fibre formation on the surface of the drum through evaporation of the solvent from the extrudate. As soon as the extrudate was dry enough for pick-up with a pair of forceps, the fibre was drawn from the drum and stretched through transfer to a take-up roller with velocity V3 of about 6 mm/s. The fibre was collected on a take-up wheel.

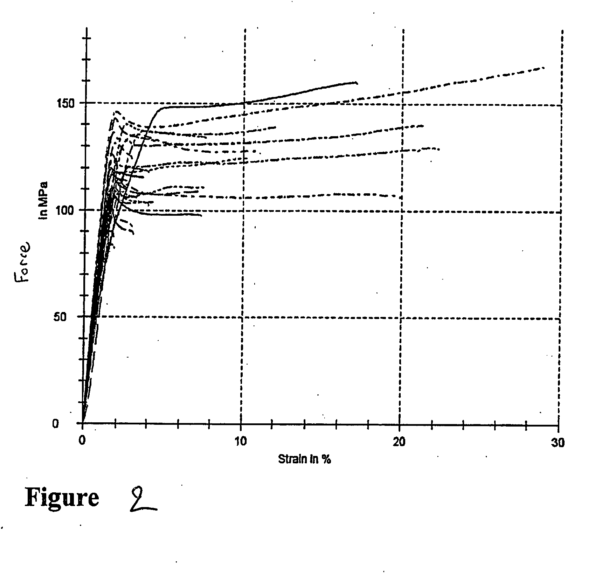

For tensile testing, three spun fibres (of length 0.6, 0.9, 1.8 m) were divided into 47 samples having a sample length of about 50-150 mm. The stress-strain curves are plotted in Figure 2. The fibres had a tensile strength of 115 MPa and a tensile Modulus of 8.2GPa with about 5-6% strain. The tensile testing values are listed in Table 1. The tensile testing was performed with a Zwick/Roell Z2.5 tensile tester at a crosshead speed of 10 mm/min. The fibres were water insoluble and had silk-like optical and haptical properties.

**Table 1:**

| Series | Rm | EMod | AB |
|---|---|---|---|
| n=47 | MPa | MPa | % |
| x | 114,86 | 8231,22 | 5,48 |
| s | 20,17 | 844,71 | 6,60 |
| min | 60,84 | 6601,90 | 0,88 |
| max | 167,29 | 10197,94 | 28,91 |

### Example 2:

A fibroin feedstock solution of about 7 % wt/v fibroin concentration was extruded with a velocity V1 of 0.27 mm/s through a 0,8 mm channel onto a drum which rotates with a circumferential velocity of 1,5mm/s and has a diameter of about 50 mm. The extruded material was then transported by the drum into a biological buffer bath containing 3 mM Copper. Following gelation of the extruded material on the drum after contact with the buffer bath, the extruded material was then picked up with a pair of forceps and collected on a take-up wheel as described in Example 1.

Tensile testing was performed of the finished product (at 10 mm crosshead speed) and shows that the "wet-spun" monofilaments (2,45 tex) had a tensile strength of 185.1 MPa and a tensile modulus of 5.9 GPa at a breaking elongation of 23.4 %. The fibres were water insoluble and had silk-like optical and haptical properties.

### Example 3:

A fibroin feedstock solution of about 10% wt/v fibroin concentration was extruded with a velocity V1 of 0.27 mm/s through five 0,8 mm channels aligned in a parallel fashion as demonstrated in Figure 4 onto a drum. The extruded material was then treated as described in Example 2. The extruded fibres were water insoluble and had silk-like optical and haptical properties.

## Claims

1. An apparatus for the continuous extrusion of a silk fibre (53) from a water-soluble silk protein (25) comprising:
- a material supplier (20, 30) supplying the water-soluble silk protein (25) and having at least one opening (40), the water-soluble silk protein (25) being extruded through the at least one opening (40) to form an extruded material,
- a moving surface (50) adjacent to and located at a distance between 0.1 mm and 50 mm from the at least one opening (40) and receiving the extruded material from the at least one opening (40); and
- a treatment zone (75) for treating the extruded material.

2. The apparatus according to claim 1, wherein the material supplier comprises a material reservoir (20) and a feedstock loading device (30).

3. The apparatus according to any one of the above claims, wherein the moving surface (50) is heatable.

4. The apparatus according to any one of the above claims, wherein a rate of movement of the moving surface (50) determines the rate of extrusion of the silk fibre (53).

5. The apparatus according to any one of the above claims, wherein the water-soluble silk protein (25) comprises fibroin.

6. The apparatus according to any one of the above claims, wherein the water-soluble silk protein (25) comprises a silkworm-derived material.

7. The apparatus according to any one of the above claims, wherein the moving surface (50) comprises a permeable surface (59).

8. The apparatus according to any one of the above claims, wherein the water-soluble silk protein (25) is self-assembling.

9. The apparatus of any of the above claims, wherein the moving surface (50) is substantially cylindrical.

10. The apparatus of any of the above claims, further comprising a storage device (100) for storage of the extruded silk fibre (53).

11. The apparatus of any of the above claims, further comprising a treatment zone in which the extruded silk fibre (53) is released from the moving surface (50).

12. The apparatus of any of the above claims, wherein the moving surface (50) comprises a permeable surface (59) through which additives (65) are passable.

13. The apparatus of any of the above claims, further comprising a treatment bath (79) through which the extruded silk fibre is passed.

14. A method for the continuous extrusion of a silk fibre (53) from a water-soluble silk protein (25) comprising
- providing the water-soluble silk protein (25) in aqueous form;
- extruding the water-soluble silk protein (25) through at least one opening (40) to form an extruded material;
- receiving the extruded material on a moving surface (50) adjacent to and situated at a distance between 0.1 and 50 mm from the at least one opening (40);
- treating the extruded material.

15. The method of claim 14, further comprising treating the extruded silk fibre (53) on the moving surface (50).

16. The method according to any one of claims 14 to 15, wherein the moving surface (50) is heated.

17. The method according to any one of claims 14 to 16, wherein a rate of movement of the moving surface (50) determines the rate of extrusion of the silk fibre (53).

18. The method according to claim 15, wherein the treating the extruded silk fibre (53) comprises changing the physical state of the extruded material.

19. The method according to any one of claims 14 to 18, wherein the water-soluble silk protein (25) is self-assembling.

20. The method according to any one of claims 14 to 19, wherein the water-soluble silk protein (25) comprises fibroin.

21. The method according to any one of claims 14 to 19, wherein the water soluble silk protein (25) comprises a silkworm-derived material.

## Patentansprüche

1. Vorrichtung zur kontinuierlichen Extrudierung einer Seidenfaser (53) von einem wasserlöslichen Seidenprotein (25) umfassend:
- eine Materialzuführung (20, 30), bereitstellend das wasserlösliche Seidenprotein (25) und aufweisend zumindest eine Öffnung (40), wobei das wasserlösliche Seidenprotein (25) durch die zumindest eine Öffnung (40) hindurch extrudiert wird, um ein extrudiertes Material zu bilden;
- eine sich bewegende Fläche (50) benachbart zu und befindlich in einem Abstand von 0,1 mm und 50 mm von der zumindest einen Öffnung (40) und aufnehmend das extrudierte Material von der zumindest einen Öffnung (40); und
- eine Behandlungszone (75) zur Behandlung des extrudierten Materials.

2. Vorrichtung nach Anspruch 1, wobei die Materialzuführung ein Materialreservoir (20) und eine Rohmaterialbeladungseinrichtung (30).

3. Vorrichtung nach einem der vorangegangenen Ansprüche, wobei die sich bewegende Fläche (50) beheizbar ist.

4. Vorrichtung nach einem der vorangegangenen Ansprüche, wobei eine Bewegungsrate der sich bewegenden Fläche (50) die Extrusionsrate der Seidenfaser (53) bestimmt.

5. Vorrichtung nach einem der vorangegangenen Ansprüche, wobei das wasserlösliche Seidenprotein (25) Fibroin umfasst.

6. Vorrichtung nach einem der vorangegangenen Ansprüche, wobei das wasserlösliche Seidenprotein (25) von Seidenraupen abstammendes Material umfasst.

7. Vorrichtung nach einem der vorangegangenen Ansprüche, wobei die sich bewegende Fläche (50) eine permeable Fläche (59) umfasst.

8. Vorrichtung nach einem der vorangegangenen Ansprüche, wobei das wasserlösliche Seidenprotein (25) selbstorganisierend ist.

9. Vorrichtung nach einem der vorangegangenen Ansprüche, wobei die sich bewegende Fläche (50) im Wesentlichen zylindrisch ist.

10. Vorrichtung nach einem der vorangegangenen Ansprüche, weiterhin umfassend eine Aufnahmeeinrichtung (100) zur Aufnahme der extrudierten Seidenfaser (53).

11. Vorrichtung nach einem der vorangegangenen Ansprüche, weiterhin umfassend eine Behandlungszone, in welcher die extrudierte Seidenfaser (53) von der sich bewegenden Fläche (50) frei gegeben wird.

12. Vorrichtung nach einem der vorangegangenen Ansprüche, wobei die sich bewegende Fläche (50) eine permeable Fläche (59) umfasst, welche von Additiven (65) passiert werden kann.

13. Vorrichtung nach einem der vorangegangenen Ansprüche, weiterhin umfassend ein Behandlungsbad (79), durch welches die extrudierte Seidenfaser hindurch geführt wird.

14. Verfahren zur kontinuierlichen Extrudierung einer Seidenfaser (53) von einem wasserlöslichen Seidenprotein (25) umfassend
- Bereitstellen des wasserlöslichen Seidenproteins (25) in wässriger Form;
- Extrudieren des wasserlöslichen Seidenproteins (25) durch zumindest eine Öffnung (40) hindurch, um ein extrudiertes Material zu bilden;
- Aufnehmen des extrudierten Materials auf einer sich bewegenden Fläche (50) benachbart zu und befindlich in einem Abstand von 0,1 mm und 50 mm von der zumindest einen Öffnung (40);
- Behandeln des extrudierten Materials.

15. Verfahren nach Anspruch 14, weiterhin umfassend die Behandlung der extrudierten Seidenfaser (53) auf der Fläche (50).

16. Verfahren nach einem der Ansprüche 14 oder 15, wobei die sich bewegende Fläche (50) beheizt ist.

17. Verfahren nach einem der Ansprüche 14 bis 16, wobei eine Bewegungsrate der sich bewegenden Fläche (50) die Extrusionsrate der Seidenfaser (53) bestimmt.

18. Verfahren nach Anspruch 15, wobei das Behandeln der extrudierten Seidenfaser (53) das Ändern des physikalischen Zustands des extrudierten Materials umfasst.

19. Verfahren nach einem Ansprüche 14 bis 18, wobei das wasserlösliche Seidenprotein (25) selbstorganisierend ist.

20. Verfahren nach einem Ansprüche 14 bis 19, wobei das wasserlösliche Seidenprotein (25) Fibroin umfasst.

21. Verfahren nach einem Ansprüche 14 bis 19, wobei das wasserlösliche Seidenprotein (25) von Seidenraupen abstammendes Material umfasst.

## Revendications

1. Appareil pour une extrusion continue d'une fibre de soie (53) depuis une protéine de soie soluble dans l'eau (25), comprenant:
- un fournisseur de matériau (20, 30) fournissant la protéine de soie soluble dans l'eau (25) et ayant au moins une ouverture (40), la protéine de soie soluble dans l'eau (25) étant extrudée à travers la au moins une ouverture (40), pour former un matériau extrudé,
- une surface en mouvement (50) adjacente à et située à une distance comprise entre 0,1 mm et 50 mm de la au moins une ouverture (40) et recevant le matériau extrudé depuis la au moins une ouverture (40) ; et
- une zone de traitement (75) pour traiter le matériau extrudé.

2. Appareil selon la revendication 1 dans lequel le fournisseur de matériau comprend un réservoir de matériau (20) et un dispositif de chargement de stock d'alimentation (30).

3. Appareil selon l'une quelconque des revendications précédentes, dans lequel la surface en mouvement (50) peut être chauffée.

4. Appareil selon l'une quelconque des revendications précédentes, dans lequel un taux de mouvement de la surface en mouvement (50) détermine le taux d'extrusion de la fibre de soie (53).

5. Appareil selon l'une quelconque des revendications précédentes, dans lequel la protéine de soie soluble dans l'eau (25) comprend de la fibroïne.

6. Appareil selon l'une quelconque des revendications précédentes, dans lequel la protéine de soie soluble dans l'eau (25) comprend un matériau dérivé des vers à soie.

7. Appareil selon l'une quelconque des revendications précédentes, dans lequel la surface en mouvement (50) comprend une surface perméable (59).

8. Appareil selon l'une quelconque des revendications précédentes, dans lequel la protéine de soie soluble dans l'eau (25) est auto-assemblée.

9. Appareil selon l'une quelconque des revendications précédentes, dans lequel la surface en mouvement (50) est sensiblement cylindrique.

10. Appareil selon l'une quelconque des revendications précédentes, comprenant en outre un dispositif de stockage (100) pour stocker la fibre de soie extrudée (53).

11. Appareil selon l'une quelconque des revendications précédentes, comprenant en outre une zone de traitement dans laquelle la fibre de soie extrudée (53) est libérée depuis la surface en mouvement (50).

12. Appareil selon l'une quelconque des revendications précédentes, dans lequel la surface en mouvement (50) comprend une surface perméable (59) à travers laquelle des additifs (65) peuvent passer.

13. Appareil selon l'une quelconque des revendications précédentes, comprenant en outre un bain de traitement (79) à travers lequel la fibre de soie extrudée est passée.

14. Procédé pour l'extrusion continue d'une fibre de soie (53) depuis une protéine de soie soluble dans l'eau (25), comprenant :
- fournir la protéine de soie soluble dans l'eau (25) sous forme aqueuse ;
- extruder la protéine de soie soluble dans l'eau (25) à travers au moins une ouverture (40) pour former un matériau extrudé ;
- recevoir le matériau extrudé sur une surface en mouvement (50) adjacente à et située à une distance entre 0,1 et 50 mm depuis la au moins une ouverture (40) ;
- traiter le matériau extrudé.

15. Procédé selon la revendication 14, comprenant en outre le traitement de la fibre de soie extrudée (53) sur la surface en mouvement (50).

16. Procédé selon l'une quelconque des revendications 14 à 15, dans lequel la surface en mouvement (50) est chauffée.

17. Procédé selon l'une quelconque des revendications 14 à 16, dans lequel un taux de mouvement de la surface en mouvement (50) détermine le taux d'extrusion de la fibre de soie (53).

18. Procédé selon la revendication 15, dans lequel le traitement de la fibre de soie extrudée (53) comprend la modification de l'état physique du matériau extrudé.

19. Procédé selon l'une quelconque des revendications 14 à 18, dans lequel la protéine de soie soluble dans l'eau (25) est auto-assemblée.

20. Procédé selon l'une quelconque des revendications 14 à 19, dans lequel la protéine de soie soluble dans l'eau (25) comprend de la fibroïne.

21. Procédé selon l'une quelconque des revendications 14 à 19, dans lequel la protéine de soie soluble dans l'eau (25) comprend un matériau dérivé des vers à soie.
